# EUROPÄISCHE PATENTSCHRIFT

(11) **EP 4 566 894 B1**
(45) Veröffentlichungstag und Bekanntmachung des Hinweises auf die Patenterteilung: **04.02.2026**
(21) Anmeldenummer: 23214360.2
(22) Anmeldetag: 05.12.2023
(51) Int. Cl.: B60R 19/18, B60R 19/34

(54) **STOSSFÄNGER FÜR EIN KRAFTFAHRZEUG**
BUMPER FOR A MOTOR VEHICLE
PARE-CHOCS POUR UN VÉHICULE AUTOMOBILE

(43) Veröffentlichungstag der Anmeldung: 11.06.2025
(73) Patentinhaber: Benteler Automobiltechnik GmbH, 33102 Paderborn (DE)
(72) Erfinder: SCHILLER, Andreas, 59590 Ehringhausen (DE); ARNS, Wilhlem, 33102 Paderborn (DE); MOLLEMEIER, Elmar, 33129 Delbrück (DE)
(74) Vertreter: Ksoll, Peter

(56) Entgegenhaltungen:
- DE-B4- 102013 226 093
- US-A1- 2006 125 254
- US-A1- 2022 001 818
- US-A1- 2022 001 819

## Beschreibung

Die Erfindung betrifft einen Stoßfänger für ein Kraftfahrzeug gemäß den Merkmalen im Oberbegriff von Anspruch 1.

Stoßfänger sind bei Kraftfahrzeugen front- und heckseitig eingebaut, um Stoßenergie von Anprallvorgängen abzufangen, so dass die Tragstruktur des Kraftfahrzeugs möglichst nicht beschädigt wird. Zudem sollen Stoßfänger dazu beitragen, Verletzungen von Personen zu minimieren. Ein Stoßfänger weist einen Querträger auf, der unter Eingliederung von Deformationselementen in Form von Crashboxen quer zu den Längsträgern eines Kraftfahrzeugrahmens festlegbar ist. Der Querträger dient dazu die aus einem Anprall resultierende Energie in die Crashboxen einzuleiten, wo die Stoßenergie in Verformungsarbeit umgewandelt wird. Die Anordnung des Stoßfängers ist dabei so aufeinander abgestimmt, dass die Crashboxen möglichst mittig auf den Längsträgern des Kraftfahrzeugs sitzen und die Stoßenergie über die Querträger mit einem möglichst geringen Biegemoment in die Crashboxen und damit auch in die Längslenker eingeleitet wird.

Stoßfänger müssen die gesetzlichen Bestimmungen ebenso wie die gestellten Anforderungen an einen Fußgängerschutz erfüllen. Eine gute Crashperformance sowie eine bauraum- sowie gewichtsoptimierte Bauweise sind hierbei Vorgaben, die im Einklang mit den hohen Anforderungen an die Sicherheitsstruktur eines Kraftfahrzeugs stehen sollen. Dabei sind strenge Sicherheitsanforderungen zu erfüllen, die über Crashtests, wie den sogenannten Pole-Test (Pfahltest) oder den RCAR-Bumper-Test, geprüft werden.

Durch die EP 1 928 704 B1 zählt ein Stoßfänger zum Stand der Technik mit einem Querträger und zwei Crashboxen. Der Querträger ist im Querschnitt hutförmig profiliert mit einem Steg und zwei Schenkeln. Jede Crashbox weist querträgerseitig einen oberen Koppelabschnitt und einen unteren Koppelabschnitt auf. Diese überlappen den oberen Schenkel bzw. den unteren Schenkel und sind jeweils mit diesen gefügt.

Die US 2006/125254 A1 offenbart einen Stoßfänger für ein Kraftfahrzeug mit einem Querträger und Crashboxen gemäß dem Oberbegriff des Anspruchs 1, wobei der Querträger einen oberen Schenkel und einen unteren Schenkel aufweist, die über einen Steg verbunden sind. Eine Crashbox weist querträgerseitig einen Koppelabschnitt auf, welcher den oberen Schenkel und den unteren Schenkel überlappt und mit diesem gefügt ist. Der Koppelabschnitt weist an seiner Stirnseite eine offene Aussparung auf. Zumindest ein die Aussparung begrenzender Wandabschnitt ist mit dem oberen Schenkel oder dem unteren Schenkel verschweißt.

Ein vergleichbarer Vorschlag geht auch aus der US 2022/0001818 A1 hervor.

Im Bereich der Verbindung zwischen einer Crashbox und dem Querträger ist ein relativ verformungsfähiger Bereich vorteilhaft. Anderenfalls kann es zur Rissentstehung bis hin zum Abriss kommen. Hier bringen die bekannten Lösungen nicht die besten Voraussetzungen mit sich.

Der Erfindung liegt ausgehend vom Stand der Technik die Aufgabe zugrunde, einen funktional verbesserten Stoßfänger für ein Kraftfahrzeug aufzuzeigen, der ein vorteilhaftes Belastungs- und Verformungsverhalten aufweist und insbesondere hinsichtlich der Fügeverbindung zwischen Querträger und Crashbox verbessert ist. Die Lösung dieser Aufgabe besteht in einem Stoßfänger gemäß Anspruch 1. Vorteilhafte Ausgestaltungen und Weiterbildungen des erfindungsgemäßen Stoßfängers sind Gegenstand der abhängigen Ansprüche.

Ausgestaltungen und Modifikationen von Merkmalen des Kraftfahrzeug-Stoßfängers, die einzeln oder in Kombination den Stoßfänger funktional und technologisch vorteilhaft ausgestalten ergeben sich auch aus der Beschreibung und den beigefügten Zeichnungen.

Richtungsangaben beziehen sich auf die Einbaulage des Stoßfängers in einem Kraftfahrzeug und ein Fahrzeugkoordinatensystem. Ein Fahrzeugkoordinatensystem ist ein dreidimensionales kartesisches Koordinatensystem, um die Achsen innerhalb eines Kraftfahrzeugs und von Bauteilen des Kraftfahrzeugs zu kennzeichnen. Die x-und y-Achse liegen in einer Horizontalebene (= Fahrzeugebene). Die x-Achse entspricht der Fahrzeuglängsachse, die y-Achse entspricht der Fahrzeugquerachse und die z-Achse entspricht der Fahrzeughochachse.

Der Stoßfänger für ein Kraftfahrzeug weist einen Querträger und Crashboxen auf. Der Querträger besitzt einen oberen Schenkel und einen unteren Schenkel, die über einen Steg verbunden sind. Eine Crashbox weist querträgerseitig, also an ihrem zum Querträger gerichteten Ende zumindest einen Koppelabschnitt auf. Der Koppelabschnitt überlappt den oberen Schenkel oder den unteren Schenkel und ist mit diesem stoffschlüssig gefügt.

Der Koppelabschnitt weist eine an seiner Stirnseite offene Aussparung auf. Zumindest ein die Aussparung begrenzender Wandabschnitt ist mit dem oberen Schenkel oder unteren Schenkel verschweißt.

Diese Ausgestaltung ermöglicht eine fertigungstechnisch vorteilhafte Fügung und eine im Belastungs- und Verformungsverhalten vorteilhafte Verbindung zwischen Crashbox und Querträger. Im Anbindungsbereich einer Crashbox an einen Querträger verformen die Crashbox und der Querträger bei einem Anprall. Der Querträger wird vor der Crashbox gestreckt, ohne dass es zu einer Rissentwicklung kommt.

Vorzugsweise ist der Koppelabschnitt gabelförmig konfiguriert und weist zwei die Aussparung seitlich begrenzende Zinken auf. Die Zinken erstrecken sich rechts und links der Aussparung in Fahrzeuglängsachse (x-Achse). Die Zinken sind mit dem Schenkel des Querträgers verschweißt und stabilisieren und stützen diesen bei einem Crash ab.

Der erfindungsgemäße Stoßfänger sieht vor, dass der Querträger einen sich an den oberen Schenkel anschließenden nach außen gerichteten oberen Frontsteg und/oder einen sich an den unteren Schenkel anschließenden nach außen gerichteten unteren Frontsteg aufweist, wobei der Koppelabschnitt mit dem oberen Frontsteg oder dem unteren Frontsteg gefügt ist.

Insbesondere weist der Querträger einen oberen Frontsteg und einen unteren Frontsteg auf. Weiterhin weist eine Crashbox einen oberen Koppelabschnitt und einen unteren Koppelabschnitt auf. Der obere Koppelabschnitt überlappt den oberen Schenkel des Querträgers. Der untere Koppelabschnitt überlappt den unteren Schenkel des Querträgers. Stirnseitig stützen die Koppelabschnitte bzw. die Zinken eines Koppelabschnitts die Schenkel sowie optional den oberen Frontsteg bzw. den unteren Frontsteg ab.

Bei einer für die Praxis vorteilhaften Ausführungsform kann der obere Koppelabschnitt und der untere Koppelabschnitt jeweils gabelförmig konfiguriert sein mit einer Aussparung und zwei die Aussparung seitlich begrenzenden Zinken. Die Zinken verlaufen geradlinig und erstrecken sich über den oberen Schenkel bzw. den unteren Schenkel bis jeweils zum oberen Frontsteg bzw. dem unteren Frontsteg des Querträgers.

Eine weitere Ausführungsform sieht vor, dass der obere Koppelabschnitt eine stirnseitig offene Aussparung aufweist. Der untere Koppelabschnitt weist eine Einformung mit seitlichen Schrägen und einem Bodenbereich auf, in welchem ein Loch vorgesehen ist. Das Loch besitzt einen umlaufend geschlossenen Rand. Das Loch im unteren Koppelabschnitt ist stirnseitig nicht offen. Über eine Lochschweißung wird der untere Koppelabschnitt mit dem unteren Schenkel des Querträgers gefügt.

Der Querträger ist zumindest auf dem überwiegenden Teil seiner Länge als geschlossenes Hohlprofil ausgeführt. Insbesondere weist der Querträger einen Mittellängenabschnitt auf, an welchen sich beidseits jeweils ein Anbindungsabschnitt für eine Crashbox anschließt. Zumindest im Mittellängenabschnitt und den Anbindungsabschnitten für die Crashboxen ist der Querträger als Hohlprofil ausgeführt und weist einen geschlossenen Innenraum auf.

Der Querträger kann ein Strangpressprofil sein mit zumindest einer sich in seiner Längsrichtung erstreckenden Hohlkammer.

Eine für die Praxis vorteilhafte Ausgestaltung sieht vor, dass der Querträger einen im Querschnitt U-förmig oder hutförmig konfigurierten Schalenkörper und ein frontseitig des Schalenkörpers angeordnetes Schließblech aufweist.

Der Querschnittsverlauf des Hohlprofils des Querträgers ist aufgrund der Schalenbauweise über die Bauteillänge belastungsgerecht gestaltet und weist vorteilhafterweise im Mittellängenabschnitt eine größere Tiefe auf als in den Anbindungsabschnitten und/oder Endabschnitten. Auch die Querträgerhöhe, d. h. die Breite von Steg und/oder Frontstegen, kann unterschiedlich und an Kompatibilitäts- und/oder Crashtestanforderungen angepasst sein.

Der Schalenkörper und das Schließblech bestehen aus Stahl. Insbesondere im Hinblick auf die Crashperformance kann der Schalenkörper aus einem ultrahochfesten Stahlwerkstoff (UHSS) bestehen oder ein pressgehärtetes Stahlbauteil aus einem Mangan-Bor-Stahl sein. Das Schließblech besteht vorzugsweise aus einem mittelfesten oder hochfesten Stahl. Der Schalenkörper besitzt eine Zugfestigkeit von größer 1.250 MPa. Das Schließblech besitzt eine Zugfestigkeit zwischen 400 MPa bis 1.200 MPa. Bei einem warmgeformten und pressgehärteten Schalenkörper liegt die Zugfestigkeit bei größer 1.450 MPa.

Eine den erfindungsgemäßen Stoßfänger insbesondere im Verformungsverhalten verbessernde Ausgestaltung sieht vor, dass der obere Frontsteg und/oder der untere Frontsteg im Bereich vor einer Crashbox eine in Fahrzeughochachse (z-Achse) orientierte Sicke aufweist. Die Versickung des Querträgers in zumindest einem Frontsteg ist rationell in die Fertigung zu integrieren und verleiht dem Querträger eine Verformbarkeit, ohne die Innenseite einer Crashbox weicher zu gestalten.

Die Sicke ist erfindungsgemäß in einem Bereich des Querträgers vor einer Crashbox vorgesehen. Insbesondere ist die Sicke vor der Aussparung in einem Koppelabschnitt angeordnet.

Eine Sicke in einem der Frontstege oder in beiden Frontstegen trägt wirkungsvoll zu einer Verbesserung der Verformbarkeit des Stoßfängersystems bei. Insbesondere für den Lastfall "Pfahl Mitte" ist das Verformungsverhalten des Stoßfängers bei einem Crash verbessert. Der Querträger wird im Anbindungsbereich vor einer Crashbox gestreckt. Die Crashboxen neigen nach innen. Einer Rissentstehung und Rissausbreitung wird entgegengewirkt, insbesondere in oder ausgehend von der Fügeverbindung zwischen einem sich stark verformenden Querträger und einer Crashbox.

Vorzugsweise ist die Sicke in Richtung zur Crashbox hin eingeformt. Weiterhin vorteilhaft ist die Sicke, bezogen auf eine Mittellängsachse einer Crashbox, in Fahrzeugquerachse (y-Achse) seitlich versetzt. Insbesondere ist die Sicke nach innen in Richtung auf den inneren Zinken des Koppelabschnitts versetzt.

Vorzugsweise erstreckt sich die Sicke über die gesamte Höhe eines Frontstegs. Hierbei ist die Höhe des Frontstegs in Fahrzeughochachse (z-Achse) gemessen. Die Sicke erstreckt sich über die Höhe des Frontstegs und geht vorzugsweise bis in den Übergang zwischen Frontsteg und oberem Schenkel oder unterem Schenkel über.

Die Sicke weist eine in Fahrzeugquerachse (y-Achse) gemessene Breite auf, die weniger als 30 mm, insbesondere weniger als 20 mm beträgt.

Das frontseitige Schließblech erstreckt sich in Längsrichtung des Querträgers. Hierbei deckt das Schließblech die Sicke ab. Das Schließblech kann sich gradlinig über die Sicke erstrecken. Möglich ist es auch, dass das Schließblech im Bereich der Sicke eine Einformung aufweist, welche in die Sicke in einem Frontsteg greift.

Das Schließblech kann eine oder mehrere Sicken aufweisen. Sicken können sich in Längsrichtung oder in Querrichtung des Schließblechs erstrecken.

Es ist auch möglich, dass anstelle von Sicken oder zusätzlich zu Sicken im Schließblech oder im Querträger insbesondere in den Schenkeln des Querträgers oder einem oder jedem Frontsteg eine lokal endfestigte bzw. weiche Zone vorzusehen, mit dem Ziel, dass Verformungs- und Belastungsverhalten des Stoßfängers einzustellen und insbesondere an Kompatibilitäts- und/oder Crashtestanforderungen anzupassen.

Die Erfindung ist nachfolgend anhand von Zeichnungen näher beschrieben. Es zeigen:
- Figur 1: einen erfindungsgemäßen Stoßfänger in einer Draufsicht;
- Figur 2: einen Ausschnitt aus dem Stoßfänger mit einer perspektivischen Ansicht auf eine Crashbox und den Anbindungsabschnitt des Querträgers;
- Figur 3: den Ausschnitt entsprechend der Darstellung der Figur 2 in einer Draufsicht;
- Figur 4: technisch schematisiert, einen vertikalen Querschnitt durch eine Crashbox im Bereich einer Aussparung im oberen Koppelabschnitt der Crashbox und
- Figur 5: ebenfalls technisch schematisiert, einen vertikalen Querschnitt durch die Crashbox im Bereich einer Sicke im oberen Frontsteg.

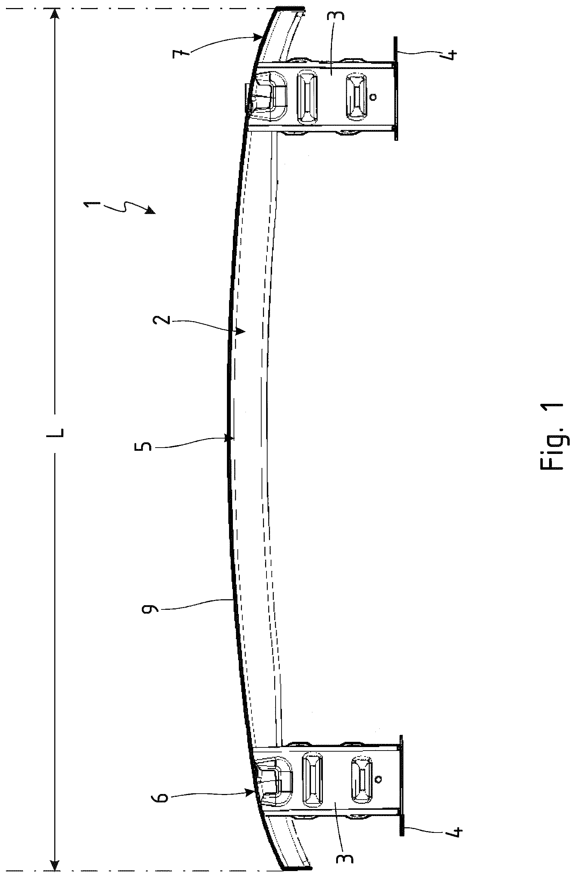

Die Figur 1 zeigt einen erfindungsgemäßen Stoßfänger 1. Ein Stoßfänger 1 kommt im Front- oder Heckbereich der Karosserie eines Kraftfahrzeugs zum Einsatz.

Der Stoßfänger 1 weist einen Querträger 2 auf, der sich in Fahrzeugquerachse (y-Achse) erstreckt und quer zu hier nicht dargestellten Längsträgern eines Kraftfahrzeugs festlegbar ist. Der Stoßfänger 1 ist über die Crashboxen 3 an den Längsträgern unter Eingliederung jeweils einer längsträgerseitigen Flanschplatte 4 abgestützt. Über die Flanschplatten 4 wird die Verbindung des Stoßfängers 1 zum Kraftfahrzeug hergestellt. Die Crashboxen 3 sollen zusätzlich zum Querträger 2 die aus einem Anprall, insbesondere bei niedriger Geschwindigkeit resultierende Energie absorbieren, in dem diese in Verformungsarbeit umgewandelt wird.

Der Querträger 2 besitzt einen Mittellängenabschnitt 5, an den sich beidseitig jeweils ein Anbindungsabschnitt 6 für eine Crashbox 3 und ein Endabschnitt 7 anschließen.

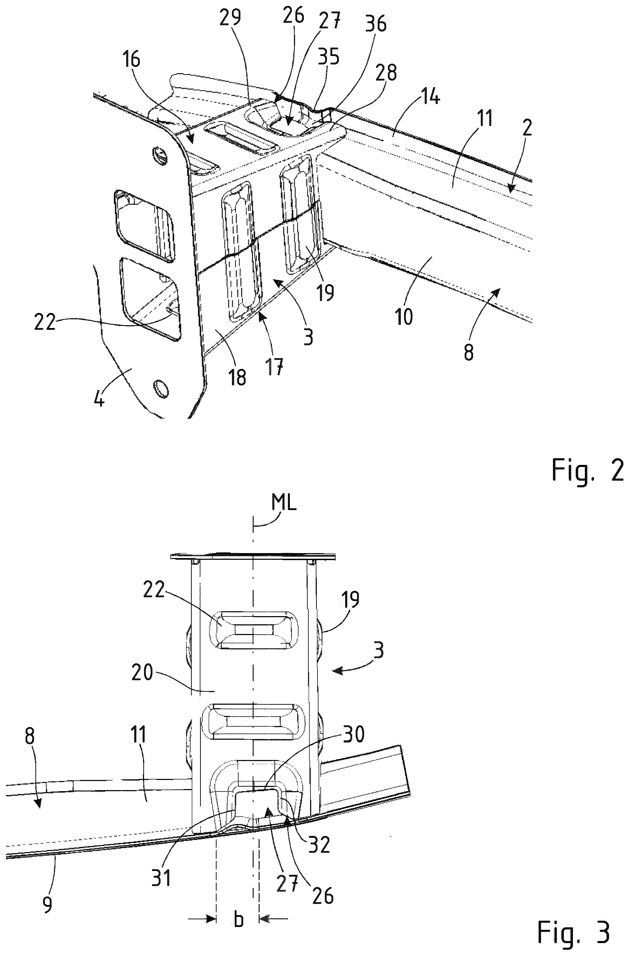

Der Querträger 2 weist einen an der Frontseite offenen Schalenkörper 8 auf, der durch ein sich über die Länge des Schalenkörpers 8 erstreckendes Schließblech 9 geschlossen ist. Der Schalenkörper 8 ist im Querschnitt U-förmig bzw. hutförmig konfiguriert und besitzt einen Steg 10 sowie einen oberen Schenkel 11 und einen unteren Schenkel 12 (siehe hierzu auch Figuren 2 bis 5). Der Steg 10 ist auf der zum Kraftfahrzeug gerichteten Seite des Stoßfängers 1 angeordnet und verbindet den oberen Schenkel 11 und den unteren Schenkel 12. Der obere Schenkel 11 und der untere Schenkel 12 sind jeweils vom Steg 10 ausgehend in Fahrzeuglängsrichtung nach vorne gerichtet.

Durch das Schließblech 9 ist der Querträger 2 über seine Länge L als geschlossenes Hohlprofil 13 ausgeführt.

An den oberen Schenkel 11 schließt sich ein nach außen gerichteter oberer Frontsteg 14 an. An den unteren Schenkel 12 schließt sich ein nach außen gerichteter unterer Frontsteg 15 an. Der oberer Frontsteg 14 und der untere Frontsteg 15 sind in Fahrzeughochachse (z-Achse) orientiert, wobei der obere Frontsteg 14 vom oberen Schenkel 11 ausgehend nach oben gerichtet und der untere Frontsteg 15 vom unteren Schenkel 12 ausgehend nach unten gerichtet ist. Das Schließblech 9 liegt an dem oberen Frontsteg 14 und dem unteren Frontsteg 15 an und ist mit diesen stoffschlüssig gefügt.

Eine Crashbox 3 ist in Schalenbauweise jeweils aus zwei Schalenteilen 16, 17 zusammengesetzt. Die Schalenteile 16, 17 sind konfigurativ aufeinander abgestimmt und überlappen sich vorzugsweise endseitig ihrer Seitenwände 18. Hier sind die Schalenteile 16, 17 miteinander stoffschlüssig gefügt. In den Seitenwänden 18 einer Crashbox 3 sind vertikale in Fahrzeughochachse (z-Achse) orientierte Sicken 19 vorgesehen. Des Weiteren weist eine Crashbox 3 eine obere Wand 20 und eine untere Wand 21 auf. In der oberen Wand 20, ebenso wie die in der unteren Wand 21, sind in Fahrzeugquerrichtung (y-Achse) verlaufende Sicken 22 eingeprägt. Die Sicken 19 in den Seitenwänden 18 sind vom Innenraum einer Crashbox 3 nach außen geformt. Die Sicken 22 in der oberen Wand 20 und in der unteren Wand 21 sind nach innen in den Innenraum einer Crashbox 3 gerichtet eingeformt.

Im Anbindungsabschnitt 6 ist eine Crashbox 3 mit dem Querträger 2 verbunden. Querträgerseitig an seinem zum Querträger 2 gerichteten Ende 23 weist eine Crashbox 3 jeweils in Verlängerung der oberen Wand 20 bzw. der unteren Wand 21 einen Koppelabschnitt 24, 25 auf. Der obere Koppelabschnitt 24 überlappt den oberen Schenkel 11 des Querträgers 2. Der untere Koppelabschnitt 25 überlappt den unteren Schenkel 12 des Querträgers 2. In den Koppelabschnitten 24, 25 ist die Crashbox 3 mit dem Querträger 2 stoffschlüssig gefügt. Dies erfolgt schweißtechnisch.

Im dargestellten Ausführungsbeispiel weist der obere Koppelabschnitt 24 eine an seiner Stirnseite 26 offene Aussparung 27 auf. Der Koppelabschnitt 24 ist gabelförmig konfiguriert und besitzt zwei die Aussparung 27 seitlich begrenzende Zinken 28, 29. Die Zinken 28, 29 erstrecken sich in Verlängerung der oberen Wand 20 bis zum oberen Frontsteg 14 und stützen bei einem Frontalaufprall den oberen Schenkel 11 sowie den oberen Frontsteg 14 ab. Dadurch wird bei einem Frontalaufprall auf ein höhenversetztes Hindernis auch bei geringer vertikaler Überdeckung eine gute Lasteinleitung und ein gutes Kraftniveau zur gezielten Deformation der Crashbox 3 erreicht. Die Zinken 28, 29 sind mit dem Schenkel 11 verschweißt.

Bei einer Ausführungsform, bei der auch der untere Koppelabschnitt 25 gabelförmig konfiguriert ist mit einer Aussparung und zwei die Aussparung seitlich begrenzenden Zinken, stützen die Zinken den unteren Schenkel 12 sowie den unteren Frontsteg 15 ab.

Die Aussparung 27 wird durch einen in Fahrzeugquerachse (y-Achse) orientierten Wandabschnitt 29 sowie zwei links und rechts der Aussparung 27 in Fahrzeuglängsachse (x-Achse) orientierte Wandabschnitte 31, 32 begrenzt. Zumindest an einem Wandabschnitt 30, 31, 32, insbesondere an allen drei Wandabschnitten 30, 31, 32, ist der Koppelabschnitt 24 mit dem oberen Schenkel 11 verschweißt. Weiterhin kann der Koppelabschnitt 24 mit dem oberen Frontsteg 14 stirnseitig der Zinken 28, 29 verschweißt sein.

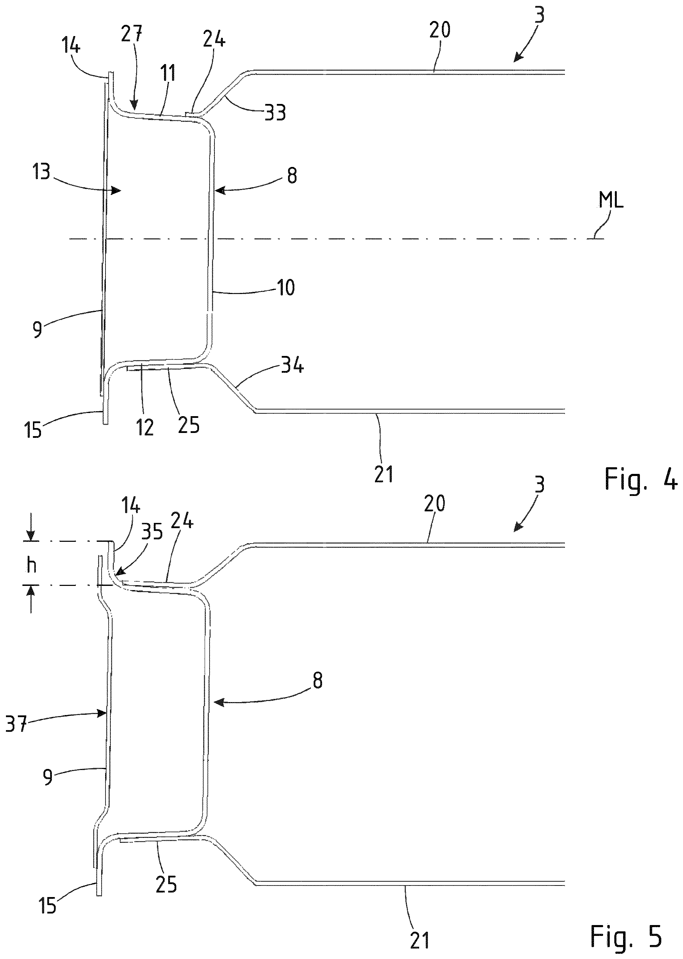

Wie insbesondere die Figuren 4 und 5 zeigen, geht die obere Wand 20 der Crashbox 3 über einen geneigt verlaufenden in Richtung zur Mittellängsachse ML der Crashbox 3 eingezogenen Übergangsabschnitt 33 in den oberen Koppelabschnitt 24 über. Die untere Wand 21 der Crashbox 3 geht ebenfalls über einen geneigt verlaufenden in Richtung zur Mittellängsachse ML der Crashbox 3 eingezogenen Übergangsabschnitt 34 in den unteren Koppelabschnitt 25 über. Der Übergangsabschnitt 33 geht wie in den Figuren 2 und 3 erkennbar in die zwei geradlinig verlaufenden Zinken 28, 29 über.

Im Bereich vor einer Crashbox 3 weist der obere Frontsteg 14 eine Sicke 35 auf. Die Sicke 35 ist in Fahrzeughochachse (z-Achse) orientiert und im Bereich vor der Aussparung 27 angeordnet. Die Sicke 35 ist in Richtung zur Crashbox 3 eingeformt. Insbesondere anhand der Darstellung der Figur 3 erkennt man, dass die Sicke 35 bezogen auf die Mittellängsachse ML einer Crashbox 3 in Fahrzeugquerachse (y-Achse) seitlich versetzt ist. Die Sicke 33 ist bezogen auf die Fahrzeugmitte seitlich in Richtung zur inneren Zinke 28 versetzt.

Die Sicke 35 erstreckt sich über die in Fahrzeughochachse (z-Achse) gemessene Höhe h des oberen Frontstegs 14 bis in den Übergang 36 zwischen dem oberen Frontsteg 14 und dem oberen Schenkel 11. Die Sicke 35 weist eine in Fahrzeugquerachse (y-Achse) gemessene Breite b auf, die weniger als 30 mm, insbesondere weniger als 20 mm beträgt.

Das Schließblech 9 erstreckt sich frontseitig entlang des Schalenkörpers 8 und deckt hierbei die Sicke 35 ab. Das Schließblech 9 kann gradlinig an der Frontseite verlaufen. Dies zeigt die Darstellung der Figur 5. Das Schließblech 9 kann aber auch eine oder mehrere Sicken aufweisen, insbesondere kann das Schließblech 9 eine sickenförmige Einformung 37 aufweisen, die im Bereich der Sicke 35 im oberen Frontsteg 14 vorgesehen ist.

### Bezugszeichen:

- 1 -: Stoßfänger
- 2 -: Querträger
- 3 -: Crashbox
- 4 -: Flanschplatte
- 5 -: Mittellängsabschnitt
- 6 -: Anbindungsabschnitt
- 7 -: Endabschnitt
- 8 -: Schalenkörper
- 9 -: Schließblech
- 10 -: Steg
- 11 -: oberer Schenkel
- 12 -: unterer Schenkel
- 13 -: Hohlprofil
- 14 -: oberer Frontsteg
- 15 -: unterer Frontsteg
- 16 -: Schalenteil
- 17 -: Schalenteil
- 18 -: Seitenwand von 16, 17
- 19 -: Sicke
- 20 -: obere Wand von 3
- 21 -: untere Wand von 3
- 22 -: Sicke
- 23 -: Ende von 3
- 24 -: Koppelabschnitt
- 25 -: Koppelabschnitt
- 26 -: Stirnseite von 24
- 27 -: Aussparung
- 28 -: Zinke
- 29 -: Zinke
- 30 -: Wandabschnitt von 27
- 31 -: Wandabschnitt von 27
- 32 -: Wandabschnitt von 27
- 33 -: Übergangsabschnitt
- 34 -: Übergangsabschnitt
- 35 -: Sicke
- 36 -: Übergang
- 37 -: Einformung

- b -: Breite
- h -: Höhe
- L -: Länge
- ML -: Mittellängsachse

## Patentansprüche

1. Stoßfänger mit einem Querträger (2) und Crashboxen (3), für ein Kraftfahrzeug, wobei der Querträger (2) einen oberen Schenkel (11) und einen unteren Schenkel (12) aufweist, die über einen Steg (10) verbunden sind und eine Crashbox (3) querträgerseitig einen Koppelabschnitt (24, 25) aufweist, welcher den oberen Schenkel (11) oder den unteren Schenkel (12) überlappt und mit diesem gefügt ist, wobei der Koppelabschnitt (24, 25) eine an seiner Stirnseite (26) offene Aussparung (27) aufweist und zumindest ein die Aussparung (27) begrenzender Wandabschnitt (30, 31, 32) mit dem oberen Schenkel (11) oder dem unteren Schenkel (12) verschweißt ist und der Querträger (2) einen sich an den oberen Schenkel (11) anschließenden nach außen gerichteten oberen Frontsteg (14) und/oder einen sich an den unteren Schenkel (12) anschließenden nach außen gerichteten unteren Frontsteg (15) aufweist, **dadurch gekennzeichnet**, dassder obere Frontsteg (14) und/oder der untere Frontsteg (15) im Bereich vor einer Crashbox (3) eine Sicke (35) aufweist.

2. Stoßfänger nach Anspruch 1, **dadurch gekennzeichnet, dass** der Koppelabschnitt (24, 25) gabelförmig ist und zwei die Aussparung (27) seitlich begrenzende Zinken (28, 29) aufweist.

3. Stoßfänger nach Anspruch 2, **dadurch gekennzeichnet, dass** der Koppelabschnitt (24, 25) mit dem oberen Frontsteg (14) oder dem unteren Frontsteg (15) gefügt ist.

4. Stoßfänger nach einem der Ansprüche 1 bis 3, **dadurch gekennzeichnet, dass** der Querträger (2) zumindest auf dem überwiegenden Teil seiner Länge (L) als geschlossenes Hohlprofil (13) ausgeführt ist.

5. Stoßfänger nach einem der Ansprüche 1 bis 4, **dadurch gekennzeichnet, dass** der Querträger (2) einen im Querschnitt U-förmig oder hutförmig konfigurierten Schalenkörper (8) und ein frontseitig des Schalenkörpers (8) angeordnetes Schließblech (9) aufweist.

6. Stoßfänger nach einem der Ansprüche 1 bis 5, **dadurch gekennzeichnet, dass** die Sicke (35) in Fahrzeughochachse (z-Achse) orientiert ist.

7. Stoßfänger nach einem der Ansprüche 1 bis 6, **dadurch gekennzeichnet, dass** die Sicke (35) vor der Aussparung (27) angeordnet ist.

8. Stoßfänger nach einem der Ansprüche 1 bis 7, **dadurch gekennzeichnet, dass** die Sicke (35) in Richtung zur Crashbox (3) eingeformt ist.

9. Stoßfänger nach einem der Ansprüche 1 bis 8, **dadurch gekennzeichnet, dass** die Sicke (35) bezogen auf die Mittellängsachse (ML) einer Crashbox (3) in Fahrzeugquerachse (y-Achse) seitlich versetzt ist.

10. Stoßfänger nach einem der Ansprüche 1 bis 9, **dadurch gekennzeichnet, dass** ein Frontsteg (14 15) eine in Fahrzeughochachse (z-Achse) gemessene Höhe (h) aufweist und die Sicke (35) sich über die Höhe (h) erstreckt.

11. Stoßfänger nach einem der Ansprüche 1 bis 10, **dadurch gekennzeichnet, dass** die Sicke (35) eine in Fahrzeugquerachse (y-Achse) gemessene Breite (b) von weniger als 30 mm, insbesondere weniger als 20 mm, aufweist.

12. Stoßfänger nach einem der Ansprüche 5 bis 11, **dadurch gekennzeichnet, dass** das Schließblech (9) die Sicke (35) bedeckt.

## Claims

1. Bumper with a cross member (2) and crash boxes (3), for a motor vehicle,
wherein the cross member (2) has an upper leg (11) and a lower leg (12) which are connected via a web (10), and a crash box (3) has, on the cross member side, a coupling section (24, 25), which overlaps the upper leg (11) or the lower leg (12) and is joined thereto, wherein the coupling section (24, 25) has a recess (27), open on its end face (26), and at least one wall section (30, 31, 32), delimiting the recess (27), is welded to the upper leg (11) or the lower leg (12) and the cross member (2) has an outwardly directed upper front web (14) adjoining the upper leg (11) and/or an outwardly directed lower front web (15) adjoining the lower leg (12), **characterised in that** the upper front web (14) and/or the lower front web (15) has a bead (35) in the region in front of a crash box (3).

2. Bumper according to claim 1, **characterised in that** the coupling section (24, 25) is fork-shaped and has two prongs (28, 29) laterally delimiting the recess (27).

3. Bumper according to claim 2, **characterised in that** the coupling section (24, 25) is joined to the upper front web (14) or the lower front web (15).

4. Bumper according to any one of claims 1 to 3, **characterised in that** the cross member (2) is configured as a closed hollow profile (13), at least over the majority of its length (L).

5. Bumper according to any one of claims 1 to 4, **characterised in that** the cross member (2) has a shell body (8), configured in a U-shaped or hat-shaped cross section and a locking plate (9) arranged on the front side of the shell body (8).

6. Bumper according to any one of claims 1 to 5, **characterised in that** the bead (35) is oriented in the vehicle vertical axis (z-axis).

7. Bumper according to any one of claims 1 to 6, **characterised in that** the bead (35) is arranged in front of the recess (27).

8. Bumper according to any one of claims 1 to 7, **characterised in that** the bead (35) is moulded in the direction of the crash box (3).

9. Bumper according to any one of claims 1 to 8, **characterised in that** the bead (35) is laterally offset in relation to the central longitudinal axis (ML) of a crash box (3) in the vehicle transverse axis (y-axis).

10. Bumper according to any one of claims 1 to 9, **characterised in that** a front web (14, 15) has a height (h) measured in the vehicle vertical axis (z-axis) and the bead (35) extends over the height (h).

11. Bumper according to any one of claims 1 to 10, **characterised in that** the bead (35) has a width (b) measured in the vehicle transverse axis (y-axis) of less than 30 mm, in particular less than 20 mm.

12. Bumper according to any one of claims 5 to 11, **characterised in that** the locking plate (9) covers the bead (35).

## Revendications

1. Pare-chocs avec une traverse (2) et des boîtes de collision (3), pour un véhicule automobile, dans lequel la traverse (2) présente une branche supérieure (11) et une branche inférieure (12) qui sont reliées par une nervure (10) et une boîte de collision (3) présente côté traverse une section de couplage (24, 25) qui chevauche la branche supérieure (11) ou la branche inférieure (12) et y est assemblée, dans lequel la section de couplage (24, 25) présente un évidement (27) ouvert sur sa face avant (26) et au moins une section de paroi (30, 31, 32) délimitant l'évidement (27) est soudée à la branche supérieure (11) ou à la branche inférieure (12)et la traverse (2) présente une nervure avant supérieure (14) orientée vers l'extérieur se raccordant à la branche supérieure (11) et/ou une nervure avant inférieure (15) orientée vers l'extérieur se raccordant à la branche inférieure (12), **caractérisé en ce que** la nervure avant supérieure (14) et/ou la nervure avant inférieure (15) présentent une moulure (35) dans la zone devant une boîte de collision (3).

2. Pare-chocs selon la revendication 1, **caractérisé en ce que** la section de couplage (24, 25) est en forme de fourche et présente deux dents (28, 29) délimitant latéralement l'évidement (27).

3. Pare-chocs selon la revendication 2, **caractérisé en ce que** la section de couplage (24, 25) est assemblée à la nervure avant supérieure (14) ou la nervure avant inférieure (15).

4. Pare-chocs selon l'une des revendications 1 à 3, **caractérisé en ce que** la traverse (2) est réalisée, au moins sur la majeure partie de sa longueur (L), sous la forme d'un profilé creux fermé (13).

5. Pare-chocs selon l'une des revendications 1 à 4, **caractérisé en ce que** la traverse (2) présente un corps en coque (8) configuré avec une forme de U ou de chapeau dans la section transversale, ainsi qu'une tôle de fermeture (9) disposée à l'avant du corps en coque (8).

6. Pare-chocs selon l'une des revendications 1 à 5, **caractérisé en ce que** la moulure (35) est orientée dans l'axe vertical de véhicule (axe z).

7. Pare-chocs selon l'une des revendications 1 à 6, **caractérisé en ce que** la moulure (35) est disposée devant l'évidement (27).

8. Pare-chocs selon l'une des revendications 1 à 7, **caractérisé en ce que** la moulure (35) est formée en direction de la boîte de collision (3).

9. Pare-chocs selon l'une quelconque des revendications 1 à 8, **caractérisé en ce que** la moulure (35) est décalée latéralement par rapport à l'axe longitudinal central (ML) d'une boîte de collision (3) dans l'axe transversal de véhicule (axe y).

10. Pare-chocs selon l'une des revendications 1 à 9, **caractérisé en ce qu'**une nervure avant (14, 15) présente une hauteur (h) mesurée dans l'axe vertical de véhicule (axe z) et la moulure (35) s'étend sur la hauteur (h).

11. Pare-chocs selon l'une des revendications 1 à 10, **caractérisé en ce que** la moulure (35) présente une largeur (b) mesurée dans l'axe transversal de véhicule (axe y) inférieure à 30 mm, notamment inférieure à 20 mm.

12. Pare-chocs selon l'une des revendications 5 à 11, **caractérisé en ce que** la tôle de fermeture (9) recouvre la moulure (35).
